# EUROPEAN PATENT APPLICATION

(11) **EP 3 316 149 A1**
(43) Date of publication of application: **02.05.2018**
(21) Application number: 15898790.9
(22) Date of filing: 27.11.2015
(51) Int. Cl.: G06F 17/30

(54) **INFORMATION ACQUIRING METHOD AND APPARATUS, DEVICE, AND COMPUTER STORAGE MEDIUM**

(30) Priority: 23.07.2015 CN 201510438468
(71) Applicant: Baidu Online Network Technology (Beijing) Co., Ltd., Beijing 100085 (CN)
(72) Inventor: LIU, Junqi, Beijing 100085 (CN); LI, Kefeng, Beijing 100085 (CN)
(74) Representative: dompatent von Kreisler Selting Werner - Partnerschaft von Patent- und Rechtsanwälten mbB
(86) International application number: PCT/CN2015/095780
(87) International publication number: WO 2017/012234

(57) **Abstract**

Embodiments of the present disclosure provide an information obtaining method and apparatus, an apparatus and a computer storage medium. In an aspect, according to embodiments of the present disclosure, the first page data requested by the client is obtained; then, the search key word is obtained according to the first page data; the hyperlink of the search key word is established in the first page data, to generate a second page data; then, the second page data is output to the client so that the client displays the page according to the second page data. Therefore, the technical solutions according to the present disclosure enable the user to directly obtain the related information of the search key word through the hyperlink of the search key word when the user has searching demands for the browsed content, thereby reduce the operation costs for obtaining the information, and improve the information obtaining efficiency.

## Description

The present disclosure claims priority to the Chinese patent application No.201510438468.3 entitled "Information Obtaining Method and Apparatus" filed on the filing date July 23, 2015, the entire disclosure of which is hereby incorporated by reference in its entirety.

### Field of the Disclosure

The present disclosure relates to the technical field of the Internet application, and particularly to an information obtaining method and apparatus, an apparatus and a computer storage medium.

### Background of the Disclosure

At present, when a user uses a terminal to browse a webpage, he usually uses a search engine to search for unlearnt information in the content of the page to obtain the desired information. It can be seen that a scenario for the user to initiate a search mainly stem from the user's non-learning of the information.

In the prior art, when the user needs to initiate a search for the unlearnt information, he needs to open a search page at the client or in the browser, then enter a key word in the search page and trigger the search engine to perform searching operation for the key word, and finally the client displays search results to the user. However, such search for the unlearnt information initiated by the user upon browsing the webpage causes higher operation costs for obtaining the desired information and reduces an efficiency of obtaining information.

### Summary of the Disclosure

In view of the above, embodiments of the present disclosure provide an information obtaining method and apparatus, which may directly obtain information related to the search key word through a hyperlink of the search key word when the user has a searching demand for the browsed content, reduce the operation costs for obtaining the information, and improve the information-obtaining efficiency.

According to an aspect of the present disclosure, there is provided an information obtaining method, comprising:
obtaining a first page data requested by the client;
obtaining a search key word according to the first page data;
establishing a hyperlink of the search key word in the first page data, to generate a second page data;
outputting the second page data to the client so that the client displays the page according to the second page data.

The above aspect and any possible implementation mode further provide an implementation mode: the obtaining the search key word according to the first page data comprises:
performing word-segmentation for a text in the first page data to obtain M segmented words, M being an integer larger than 1;
screening away universal words and invalid words from the M segmented words to obtain N segmented words, N being an integer less than or equal to M and larger than 0;
obtaining the search key word from the N segmented words according to at least one of rare words repository, hot words repository and new words repository.

The above aspect and any possible implementation mode further provide an implementation mode: the establishing the hyperlink of the search key word in the first page data, to generate a second page data comprises:
configuring a style of the search key word as a hyperlink style in the first page data and establishing an association relationship between the search key word and the hyperlink to generate the second page data.

The above aspect and any possible implementation mode further provide an implementation mode: before outputting the second page data to the client, the method further comprises:
setting a first identifier in the second page data, the first identifier being used to indicate that page content to which the hyperlink of the search key word is directed needs to be pre-loaded so that the client, according to the first identifier in the second page data, buffers the page content to which the hyperlink of the search key word is directed.

The above aspect and any possible implementation mode further provide an implementation mode: before outputting the second page data to the client, the method further comprises:
setting a second identifier in the second page data, the second identifier being used to indicate a display pattern of the page content to which the hyperlink of the search key word is directed, so that when the search key word is clicked, the client, according to the second identifier of the second page data, displays the page content to which the hyperlink of the search key word is directed.

According to another aspect of embodiments of the present disclosure, there is provided an information obtaining apparatus, comprising:
an obtaining unit configured to obtain a first page data requested by the client;
a processing unit configured to obtain a search key word according to the first page data;
the processing unit further configured to establish a hyperlink of the search key word in the first page data, to generate a second page data;
an outputting unit configured to output the second page data to the client so that the client displays the page according to the second page data.

The above aspect and any possible implementation mode further provide an implementation mode: the processing unit is specifically configured to:
perform word-segmentation for a text in the first page data to obtain M segmented words, M being an integer larger than 1;
screen away universal words and invalid words from the M segmented words to obtain N segmented words, N being an integer less than or equal to M and larger than 0;
obtain the search key word from the N segmented words according to at least one of rare words repository, hot words repository and new words repository.

The above aspect and any possible implementation mode further provide an implementation mode: the processing unit is specifically configured to:
configure a style of the search key word as a hyperlink style in the first page data and establish an association relationship between the search key word and the hyperlink to generate the second page data.

The above aspect and any possible implementation mode further provide an implementation mode: the processing unit is further configured to:
set a first identifier in the second page data, the first identifier being used to indicate that the page content to which the hyperlink of the search key word is directed needs to be pre-loaded so that the client, according to the first identifier in the second page data, buffers the page content to which the hyperlink of the search key word is directed.

The above aspect and any possible implementation mode further provide an implementation mode: the processing unit is further configured to:
set a second identifier in the second page data, the second identifier being used to indicate a display pattern of the page content to which the hyperlink of the search key word is directed, so that when the search key word is clicked, the client, according to the second identifier of the second page data, displays the page content to which the hyperlink of the search key word is directed.

As can be seen from the above technical solutions, embodiments of the present disclosure have the following advantageous effects:
According to the technical solutions of embodiments according to the present disclosure, the search key word needed by the user is mined according to the page content currently requested by the user to browse, then the hyperlink of the search key word is established, so that the related information of the search key word may be directly obtained through the hyperlink of the search key word when the user has searching demands for the browsed content. Therefore, the technical solutions according to the present disclosure enable the user to obtain the desired information in time, reduce the operation costs for obtaining the information, shorten the duration for obtaining the information and improve the information obtaining efficiency.

### Brief Description of Drawings

Fig. 1 is a flow chart of an information obtaining method according to an embodiment of the present disclosure;
Fig. 2 is a block diagram of an information obtaining apparatus according to an embodiment of the present disclosure.

### Detailed Description of Preferred Embodiments

The present disclosure will be described in detail in conjunction with figures and specific embodiments to make objectives, technical solutions and advantages of the present disclosure more apparent.

It should be appreciated that embodiments described here are only partial embodiments of the present disclosure, not all embodiments. Based on embodiments in the present disclosure, all other embodiments obtained by those having ordinary skill in the art without making inventive efforts all fall within the protection scope of the present disclosure.

Terms used in embodiments of the present disclosure are only intended to describe specific embodiments, not to limit the present disclosure. Singular forms "a", "said" and "the" used in embodiments and claims of the present disclosure are also intended to include plural forms, unless other senses are clearly defined in the context.

It should be appreciated that the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

It should be appreciated that although terms such as "first" and "second" might be used in the embodiments of the present disclosure to describe page data, the page data should not be limited to these terms. These terms are only used to distinguish the page data from one another. For example, without departing from the scope of embodiments of the present disclosure, the first page data may be called the second page data, and similarly the second page data may also be called the first page data.

Depending on the context, the word "if' as used herein may be construed as "at the time when..." or "when ..." or "responsive to determining" or "responsive to detecting". Similarly, depending on the context, phrases "if ... is determined" or "if ... (stated condition or event) is detected" may be construed as "when ... is determined" or "responsive to determining" or "when ... (stated condition or event) is detected" or "responsive to detecting (stated condition or event)".

### Embodiment 1

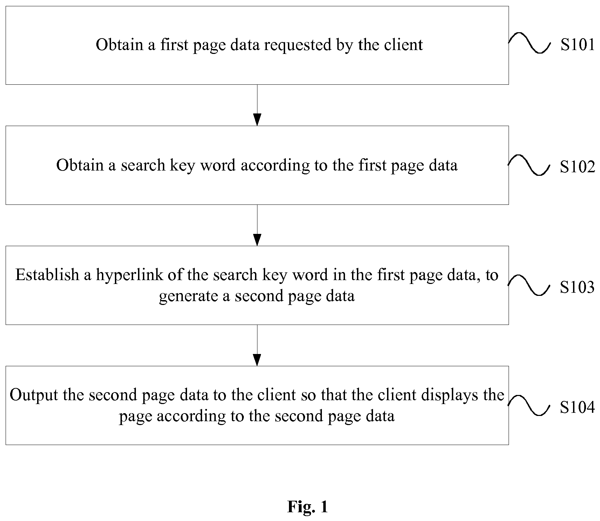

The present embodiment of the present disclosure provides an information obtaining method. Referring to Fig. 1, Fig. 1 is a flow chart of an information obtaining method according to an embodiment of the present disclosure. As shown in Fig. 1, the method comprises the following steps:
S101: obtaining a first page data requested by the client.
S102: obtaining a search key word according to the first page data.
S103: establishing a hyperlink of the search key word in the first page data, to generate a second page data.
S104: outputting the second page data to the client so that the client displays the page according to the second page data.

### Embodiment 2

Based on the information obtaining method provided by Embodiment 1, the present embodiment specifically describes the method of obtaining the first page data requested by the client. The step may specifically comprise:
For example, in the embodiment of the present disclosure, the step of obtaining the first page data requested by the client may include but is not limited to:
When the client needs to upload a page, the client initiates to a server a Hyper Text Transfer Protocol (HTTP) request for a Uniform Resource Locator (URL) of the page to request to obtain the page data of the page from server, which is called the first page data in the embodiment of the present disclosure. As such, the server, according to the HTTP request initiated by the client, may acquire the URL requested by the client and thereby obtain the first page data according to the URL.

### Embodiment 3

Based on the information obtaining method provided by Embodiment 1 and Embodiment 2, the present embodiment of the present disclosure specifically describes the method of obtaining a search key word according to the first page data as stated in S102. The step may specifically comprise:
For example, in the embodiment of the present disclosure, after obtaining the first page data requested by the client, the server needs to obtain the search key word according to the first page data. The method may include but is not limited to:
First, the server may perform word-segmentation for the text in the first page data to obtain M segmented words, wherein M is an integer larger than 1. Then, the server screens away universal words and invalid words from the M segmented words to obtain N segmented words, wherein N is an integer less than or equal to M and larger than 0. Finally, the server obtains the search key word from the N segmented words according to at least one of rare words repository, hot words repository and new words repository.

In a specific implementation procedure, the server may use an already-existing segmented word dictionary to perform word segmentation for the text of the first page data.

In a specific implementation procedure, the server may use an already-existing universal dictionary and screen away universal vocabulary falling into the universal dictionary from the M segmented words. It may be appreciated that the universal vocabulary refers to commonly-used vocabulary which generally do not induce the user's searching behavior. Therefore, the universal vocabulary may be removed from the M segmented words.

In a specific implementation procedure, the server may use an already-existing invalid words dictionary to screen away invalid vocabulary falling into the invalid words dictionary from the M segmented words. It may be appreciated that the invalid vocabulary may include modal words, adverbs, auxiliary words and the like. This type of vocabulary generally does not induce the user's searching behavior. Therefore, the invalid vocabulary may be removed from the M segmented words.

In a specific implementation procedure, the server may, according to the rare words repository, obtain segmented words belonging to the rare words repository from the N segmented words, as the search key word, and/or, the server may, according to the hot words repository, obtain segmented words belonging to the hot words repository from the N segmented words, as the search key word, and/or, the server may, according to the new word repository, obtain segmented words belonging to the new words repository from the N segmented words, as the search key words.

It may be appreciated that rare words, hot words and new words are much probable to draw the user's interest and thereby induce the user's searching behavior. Hence, the serer may use at least one of the rare words repository, hot words repository and new words repository to mine the user-needed search key word from segmented words.

### Embodiment 4

Based on the information obtaining method provided by Embodiment 1, Embodiment 2 and Embodiment 3, the present embodiment specifically describes the method of establishing a hyperlink of the search key word in the first page data, to generate a second page data as stated in S103. The step may specifically comprise:
To ensure that the user can directly obtain related information of the search key word by clicking the search key word in the page, the hyperlink of the search key word is established in the first page data in the present embodiment, so that the hyperlink link can be opened by clicking the search key word, and then related information of the search key word is obtained.

For example, in the embodiment of the present disclosure, the method of establishing a hyperlink of the search key word in the first page data, to generate a second page data may comprise but not limited to:
First, the server may configure a style of the search key word as a hyperlink style in the first page data. Then, the server establishes an association relationship between the search key word and the hyperlink to generate the second page data.

In a specific implementation procedure, take the first page data as a hypertext Markup Language (HTML) document. Creation of the hyperlink in the HTML is implemented by using <a> tag in the HTML document, wherein a hyperlink directed to another document may be created by using an attribute href in the <a> tag, and it is feasible to configure, in the HTML document, and between a start tag and an ending tag, a search key word displayed as the hyperlink to implement establishment of the association relationship between the search key word and the hyperlink. The first page data becomes the second page data after undergoing the above processing. It needs to be appreciated that the search key word for which the hyperlink has been established, after being displayed, is different from other text content in color, and the search key word is underlined.

For example, if the search key word belongs to a specific noun and has a sole sense, for example, stock code, Degang Guo, iPhone6, a content source address such as an encyclopedia address or homepage address is considered as the hyperlink of the search key word to establish the association relationship between the search key word and the content source address.

Or, for another example, it is further feasible to consider an address of a search result page of the search key word as the hyperlink of the search key word to establish the association relationship between the search key word and the content source address. As such, after the user clicks the search key word in the page, he may directly browse the search result page of the search key word, and the user needn't manually open the search interface, input the key word and trigger the search button to obtain the search result page. Hence, this may reduce the operation cost and improve the information obtaining efficiency.

### Embodiment 5

Based on the information obtaining method provided by Embodiment 1, Embodiment 2 to Embodiment 4, the present embodiment specifically describes the method of outputting the second page data to the client so that the client displays the page according to the second page data as stated in S104. The step may specifically comprise:
After obtaining the second page data, the server may output the second page data to the client so that the client uses a preset page template to render the second page data to implement the display of the second page data.

### Embodiment 6

Based on the information obtaining method provided by Embodiment 1, Embodiment 2 to Embodiment 5, the present embodiment specifically describes optional steps of the information obtaining method. The optional steps may specifically comprise:
In a specific implementation procedure, a first identifier may be set in the second page data before the second page data is output to the client. The first identifier is used to indicate that the page content to which the hyperlink of the search key word is directed needs to be pre-loaded so that the client, according to the first identifier in the second page data, buffers the page content to which the hyperlink of the search key word is directed.

Furthermore, since the page content to which the hyperlink of the search key word is directed needs to be pre-loaded, the server further needs to send the page content to which the hyperlink of the search key word is directed to the client. As such, after receiving the second page data, the client obtains the first identifier from the second page data, and according to the first identifier, knows that the page content to which the hyperlink of the search key word is directed needs to be pre-loaded, and thereby buffers the received page content to which the hyperlink of the search key word is directed. In this way, after the user clicks the search key word, the client may, according to the buffered page content, directly display the page content to which the hyperlink of the search key word is directed, thereby avoiding the situation that after the user clicks the search key word, the page content is temporarily requested from the server. Hence, the manner of pre-loading the page content may improve the display efficiency of the page and enhance the user's efficiency in obtaining information.

Or, in a specific implementation procedure, a second identifier may be set in the second page data before the second page data is output to the client. The second identifier is used to indicate a display pattern of the page content to which the hyperlink of the search key word is directed, so that when the search key word is clicked, the client, according to the second identifier of the second page data, display the page content to which the hyperlink of the search key word is directed.

Preferably, the display pattern of the page content to which the hyperlink of the search key word is directed may comprise but is not limited to: displaying in next view or displaying in the current view in a form of a floating layer.

It may be understood that after receiving the second page data, the client obtains the second identifier from the second page data, and that when the user clicks the search key word, the client may display the page content to which the hyperlink of the search key word is directed according to the display pattern indicated by the second identifier.

For example, the first identifier and second identifier may be implemented using a tag identifier. For example, a tag identifier whose value is equal to 1 is considered as the first identifier which is used to indicate the page content to which the hyperlink of the search key word is directed needs to be pre-loaded. A tag identifier whose value is equal to 2 is considered as the second identifier used to indicate that the display pattern of the page content to which the hyperlink of the search key word is directed is displaying in next view. A tag identifier whose value is equal to 3 is considered as the second identifier used to indicate that the display pattern of the page content to which the hyperlink of the search key word is directed is displaying in the current view in the form of a floating layer. As such, after the client obtains the second page data, corresponding processing may be performed according to the value of the tag identifier.

Embodiments of the present disclosure further provide apparatus embodiments for implementing the steps and method in the above method embodiments.

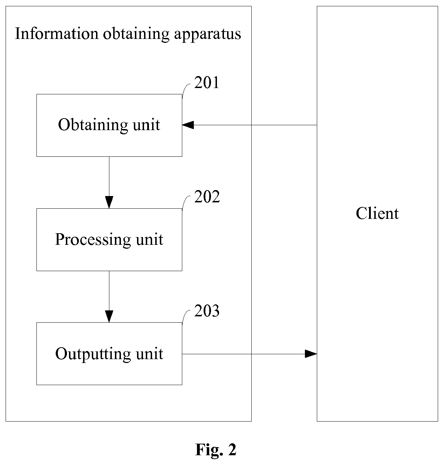

Referring to Fig. 2, it is a block diagram of an information obtaining apparatus according to an embodiment of the present disclosure. As shown in the figure, the system comprises:
an obtaining unit 201 configured to obtain a first page data requested by the client;
a processing unit 202 configured to obtain a search key word according to the first page data;
the processing unit 202 further configured to establish a hyperlink of the search key word in the first page data, to generate a second page data;
an outputting unit 203 configured to output the second page data to the client so that the client displays the page according to the second page data.

Preferably, the processing unit 202 is specifically configured to:
perform word-segmentation for the text in the first page data to obtain M segmented words, M being an integer larger than 1;
screen away universal words and invalid words from the M segmented words to obtain N segmented words, N being an integer less than or equal to M and larger than 0;
obtain the search key word from the N segmented words according to at least one of rare words repository, hot words repository and new words repository.

Preferably, the processing unit 202 is specifically configured to:
configure a style of the search key word as a hyperlink style in the first page data and establish an association relationship between the search key word and the hyperlink to generate the second page data.

Optionally, the processing unit 202 is further configured to:
set a first identifier in the second page data, the first identifier being used to indicate that the page content to which the hyperlink of the search key word is directed needs to be pre-loaded so that the client, according to the first identifier in the second page data, buffers the page content to which the hyperlink of the search key word is directed.

Optionally, the processing unit 202 is further configured to:
set a second identifier in the second page data, the second identifier being used to indicate a display pattern of the page content to which the hyperlink of the search key word is directed, so that when the search key word is clicked, the client, according to the second identifier of the second page data, display the page content to which the hyperlink of the search key word is directed.

Since the units in the present embodiments can execute the method as shown in Fig. 1, reference may be made to related depictions of Fig. 1 for unspecified portions in the present embodiment.

Technical solutions of embodiments of the present disclosure have the following advantageous effects:
In embodiments of the present disclosure, the first page data requested by the client is obtained; then, the search key word is obtained according to the first page data; the hyperlink of the search key word is established in the first page data, to generate a second page data; then, the second page data is output to the client so that the client displays the page according to the second page data.

According to the technical solutions according to the present disclosure, the search key word needed by the user is mined according to the page content currently requested by the user to browse, then the hyperlink of the search key word is established, so that the related information of the search key word may be directly obtained through the hyperlink of the search key word when the user has searching demands for the browsed content. Therefore, the technical solutions according to the present disclosure enable the user to obtain the desired information in time, reduce the operation costs for obtaining the information, shorten the duration for obtaining the information and improve the information obtaining efficiency.

Those skilled in the art can clearly understand that for purpose of convenience and brevity of depictions, reference may be made to corresponding procedures in the aforesaid method embodiments for specific operation procedures of the system, apparatus and units described above, which will not be detailed any more.

In the embodiments provided by the present disclosure, it should be understood that the revealed system, apparatus and method can be implemented through other ways. For example, the above-described embodiments for the apparatus are only exemplary, e.g., the division of the units is merely logical one, and, in reality, they can be divided in other ways upon implementation. For example, a plurality of units or components may be combined or integrated into another system, or some features may be neglected or not executed. In addition, mutual coupling or direct coupling or communicative connection as displayed or discussed may be indirect coupling or communicative connection performed via some interfaces, means or units and may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, read-only memory (ROM), a random access memory (RAM), magnetic disk, or an optical disk.

What are stated above are only preferred embodiments of the present disclosure, not intended to limit the disclosure. Any modifications, equivalent replacements, improvements and the like made within the spirit and principles of the present disclosure, should all be included in the present disclosure within the scope of protection.

## Claims

1. An information obtaining method, wherein the method comprises:
obtaining a first page data requested by the client;
obtaining a search key word according to the first page data;
establishing a hyperlink of the search key word in the first page data, to generate a second page data;
outputting the second page data to the client so that the client displays the page according to the second page data.

2. The method according to claim 1, wherein the obtaining the search key word according to the first page data comprises:
performing word-segmentation for a text in the first page data to obtain M segmented words, M being an integer larger than 1;
screening away universal words and invalid words from the M segmented words to obtain N segmented words, N being an integer less than or equal to M and larger than 0;
obtaining the search key word from the N segmented words according to at least one of rare words repository, hot words repository and new words repository.

3. The method according to claim 1, wherein the establishing the hyperlink of the search key word in the first page data, to generate a second page data comprises:
configuring a style of the search key word as a hyperlink style in the first page data and establishing an association relationship between the search key word and the hyperlink to generate the second page data.

4. The method according to claim 1 or 3, wherein before outputting the second page data to the client, the method further comprises:
setting a first identifier in the second page data, the first identifier being used to indicate that page content to which the hyperlink of the search key word is directed needs to be pre-loaded so that the client, according to the first identifier in the second page data, buffers the page content to which the hyperlink of the search key word is directed.

5. The method according to claim 1 or 3, wherein before outputting the second page data to the client, the method further comprises:
setting a second identifier in the second page data, the second identifier being used to indicate a display pattern of the page content to which the hyperlink of the search key word is directed, so that when the search key word is clicked, the client, according to the second identifier of the second page data, displays the page content to which the hyperlink of the search key word is directed.

6. An information obtaining apparatus, wherein the apparatus comprises:
an obtaining unit configured to obtain a first page data requested by the client;
a processing unit configured to obtain a search key word according to the first page data;
the processing unit further configured to establish a hyperlink of the search key word in the first page data, to generate a second page data;
an outputting unit configured to output the second page data to the client so that the client displays the page according to the second page data.

7. The apparatus according to claim 6, wherein the processing unit is specifically configured to:
perform word-segmentation for a text in the first page data to obtain M segmented words, M being an integer larger than 1;
screen away universal words and invalid words from the M segmented words to obtain N segmented words, N being an integer less than or equal to M and larger than 0;
obtain the search key word from the N segmented words according to at least one of rare words repository, hot words repository and new words repository.

8. The apparatus according to claim 6, wherein the processing unit is specifically configured to:
configure a style of the search key word as a hyperlink style in the first page data and establish an association relationship between the search key word and the hyperlink to generate the second page data.

9. The apparatus according to claim 6 or 8, wherein the processing unit is further configured to:
set a first identifier in the second page data, the first identifier being used to indicate that the page content to which the hyperlink of the search key word is directed needs to be pre-loaded so that the client, according to the first identifier in the second page data, buffers the page content to which the hyperlink of the search key word is directed.

10. The apparatus according to claim 6 or 8, wherein the processing unit is further configured to:
set a second identifier in the second page data, the second identifier being used to indicate a display pattern of the page content to which the hyperlink of the search key word is directed, so that when the search key word is clicked, the client, according to the second identifier of the second page data, display the page content to which the hyperlink of the search key word is directed.

11. An apparatus, comprising
one or more processors;
a memory;
one or more programs stored in the memory and configured to execute the following operations when executed by the one or more processors:
obtaining a first page data requested by the client;
obtaining a search key word according to the first page data;
establishing a hyperlink of the search key word in the first page data, to generate a second page data;
outputting the second page data to the client so that the client displays the page according to the second page data.

12. An non-volatile computer storage medium in which one or more programs are stored, an apparatus being enabled to execute the following operations when said one or more programs are executed by the apparatus:
obtaining a first page data requested by the client;
obtaining a search key word according to the first page data;
establishing a hyperlink of the search key word in the first page data, to generate a second page data;
outputting the second page data to the client so that the client displays the page according to the second page data.
